Europäisches Patentamt

European Patent Office

Office européen des brevets

(19)

(11) EP 0 776 824 B1

(12) **EUROPÄISCHE PATENTSCHRIFT**

(45) Veröffentlichungstag und Bekanntmachung des Hinweises auf die Patenterteilung:
**12.03.2003   Patentblatt 2003/11**

(51) Int Cl.$^7$: **B64F 1/18**, B64D 45/08, G01S 5/16

(21) Anmeldenummer: **94927124.1**

(22) Anmeldetag: **19.08.1994**

(86) Internationale Anmeldenummer:
**PCT/RU94/00195**

(87) Internationale Veröffentlichungsnummer:
**WO 96/006007 (29.02.1996 Gazette 1996/10)**

(54) **HUBSCHRAUBER-NAVIGATIONSSYSTEM MIT AN BORD BEFINDLICHER TV-KAMERA**

HELICOPTER NAVIGATION SYSTEM

SYSTEME DE NAVIGATION POUR HELICOPTERE

(84) Benannte Vertragsstaaten:
**AT BE CH DE DK ES FR GB GR IE IT LI LU MC NL PT SE**

(43) Veröffentlichungstag der Anmeldung:
**04.06.1997   Patentblatt 1997/23**

(73) Patentinhaber:
• **Safyan, Anatolii Dimitrivich**
**113648 Moskau (RU)**
• **Safyan, Dimitrii Anatolievich**
**195253 Sankt Petersburg (RU)**

(72) Erfinder: **SAFYAN, Dmitry Anatolievich**
**St.Petersburg, 195253 (RU)**

(74) Vertreter: **Kruspig, Volkmar, Dipl.-Ing. et al**
**Patentanwälte**
**Meissner, Bolte & Partner**
**Postfach 86 06 24**
**81633 München (DE)**

(56) Entgegenhaltungen:
| | |
|---|---|
| EP-A- 0 359 663 | DE-A- 3 529 911 |
| DE-A- 3 927 851 | FR-A- 2 207 059 |
| US-A- 3 721 499 | US-A- 4 385 354 |
| US-A- 4 862 164 | US-A- 4 866 626 |
| US-A- 5 123 615 | |

## Beschreibung

Die Erfindung betrifft ein Hubschrauber-Navigationssystem mit im unteren Teil des Hubschrauberrumpfs angeordneten Fernsehkameras. Das Navigationssystem dient der Ausrüstung von Hubschraubern mit dem Ziel der Gewährleistung einer Landemöglichkeit auf zuvor ausgerüsteten Landeplätzen auch unter komplizierten meteorologischen Bedingungen. Das Navigationssystem soll entsprechende Informationen für den Piloten bereitstellen, wobei außerdem die Verwendung bei einem automatischen Hubschrauberlandesystem denkbar ist.

Es sind bereits Anzeige- und Navigationsvorrichtungen für Hubschrauber bekannt, die ein abgeschlossenes Fernsehsystem darstellen, und die eine TV-Kamera umfassen, welche im unteren Teil eines Hubschraubers angeordnet ist. Die optische Achse der TV-Kamera ist bei bekannten Lösungen parallel zu der Linie, die durch Rotorachse, Stopmechanismus und Kabinenstabilisierung führt, gerichtet. Die bereits vorgeschlagenen Navigationssysteme besitzen eine Anzeigeeinrichtung zur Darstellung von Videoinformationen im Gesichtsfeld der Kamera mit Superposition von Signalen aus Blinkmarkierungen oder Blinkleuchten. Dieses bekannte System erlaubt dem Piloten, mit dem Hubschrauber über einem Gelände oder Meeresabschnitt mit gewünschter Genauigkeit zu schweben, um z.B. Last an Bord zu hieven.

Dabei formt eine spezielle elektronische Vorrichtung die Signale von den Blinkmarkierungen so um, daß deren Lage im Kamerabild auf einem Monitor eine Funktion der Abweichung des Hubschraubers von der optimalen Position zum Lastenaufzug darstellt. Die Aufgabe des Piloten besteht darin, eine Überdeckung der Blinkmarkierungen herzustellen. Weitere Aufgaben löst dieses Fernsehsystem nicht, und es ist insbesondere nicht anwendbar, um die Landung eines Hubschraubers auf beengten Landeplätzen und schlechten Wetterbedingungen zu verbessern.

Der bekannte Stand der Technik ist beispielsweise repräsentiert durch die DE-A-36 29 911, US-A-5,123,615, US-A-4,866,626 und US-A-4,862,164. Hinsichtlich des zitierten Standes der Technik muß für Anwendungen zwischen Flächenflüglern und sogenannten Tragflüglern, d.h. Hubschraubern unterschieden werden. Die Lösung nach US-A-4,866,626 betrifft die Anordnung mindestens einer Video-Kamera vorausschauend am Bug eines Flächenflüglers. Auf einem am Boden befindlichen Feld befinden sich vier Blinkbojen, welche ein Parallelogramm aufspannen. Aus den von der Video-Kamera erhaltenen Bildern werden dann Sektoren berechnet, um dann Höhe und Lage der Position der Kamera und damit des Flugzeugs zu ermitteln. Ohne Mitschwenken der Kamera funktioniert diese Lösung jedoch nur bis zu einem bestimmten Annäherungspunkt, d.h. die offenbarte technische Variante ist nicht für einen Schwebeflug bzw. eine Landung aus der Schwebe heraus geeignet.

Eine Navigations- und Landehilfe speziell für Tragflügler, nämlich Hubschrauber, beschreibt die US-A-5,123,615. Dort wird ebenfalls ein Kamerasystem benutzt, jedoch befindet sich dieses nicht an Bord des Hubschraubers, sondern auf der Landeplattform. Der bevorzugt untere Rumpfbereich des Hubschraubers besitzt drei Leuchtbojen, die in einer Reihe angeordnet sind. Die Position der Leuchtbojen oder Blinklichter wird mit Hilfe des am Boden bzw. an Bord eines Schiffes befindlichen Kamerasystems ermittelt, um auf diese Weise den Landevorgang zu unterstützen und im Anschluß zügig das jeweilige Luftfahrzeug in eine geschützte Position, z.B. einen Hangar, zu überführen, da bei hohem Seegang die Gefahr besteht, daß beim Rollen oder Nikken des Schiffs sich das Luftfahrzeug über Bord bewegt.

Aus dem Vorgenannten ist es daher Aufgabe der Erfindung, ein weiterentwickeltes Hubschrauber-Navigationssystem mit im unteren Teil des Hubschrauberrumpfs angeordneten Fernsehkameras anzugeben, das eine Erhöhung der Landesicherheit, insbesondere bei schlechten Wetterbedingungen ermöglicht.

Die Lösung der Aufgabe der Erfindung erfolgt mit einem Gegenstand gemäß den Merkmalen des Patentanspruches.

Der Grundgedanke der Erfindung besteht darin, daß auf dem Landeplatz drei Blinkleuchten oder Blinkbojen in den Spitzen eines gleichschenkeligen Dreiecks angeordnet sind, wobei die Blinkbojen oder Blinkleuchten von einem entsprechenden Blinkgenerator mit entsprechenden elektrischen Signalen beaufschlagt werden. Die Blinkbojen emittieren Strahlung vorzugsweise im Infrarotbereich.

Zwei im Hubschrauber angeordnete Kameras sind so angeordnet, daß diese einen im wesentlichen rechten Winkel einschließen. Eine der Kameras ist mit der optischen Achse parallel zur Längsachse des Hubschraubers ausgerichtet, wobei die optische Achse der anderen Kamera durch die Rotorachse nach unten verläuft. Über einen Kommutator und einen Selektor können die Kameras separat ein- und ausgeschaltet werden. Es liegt im Sinne der Erfindung, daß die Kameras im Strahlungsbereich der Blinkbojen selektiv sind. Mittels der ersten Kamera wird zunächst der Abstand zu den Blinkbojen in der Anflugphase nach einer vorgegebenen Beziehung bestimmt, wobei die Abstandsinformation auf eine Anzeigeeinheit gelangt. Im Zuge der Annäherung an den Landeplatz wird erfindungsgemäß eine Steuerung des Hubschrauberkurses so vorgenommen, daß alle erhaltenen drei Signale von den Blinkbojen näher an ein gerastertes Koordinatenzentrum herangeführt werden.

Mit dem Übergang in die Standschwebe über dem Landeplatz wird ein Ausschaltkommando an die erste, quasi vorausschauende Kamera gegeben und ein Signal an die hierzu mit der optischen Achse senkrecht ausgerichtete weitere Kamera geleitet, um diese einzuschalten. Die erste und die zweite Kamera sind im gleichen spektralen Bereich empfindlich.

Eine Baugruppe zur Messung von Höhe und Sinkgeschwindigkeit bestimmt dann diese nach weiteren Beziehungen, unter Berücksichtigung der Seitenlänge des Blinkbojendreiecks und dem maximalen Abstand zwischen den Videosignalen von den Blinkbojen in der Ebene der TV-Kamera, d.h. in der Abbildungsebene. Die Größe der Seitenlänge des Dreiecks der Blinkboje wird für den konkreten Landeplatz vorab vom Piloten über eine Bedieneinheit in die Berechnungsvorrichtung eingegeben. Über einen weiteren Rechner wird eine Bestimmung der Koordinaten des Schwerezentrums des Dreiecks vorgenommen, wobei sich dieses Schwerezentrum aus den Videosignalen von den Blinkbojen ergibt. Hieraus wird ein TV-Index gebildet, dessen Lage dem Schwerezentrum des Dreiecks entspricht. Diese Informationen werden dann der Anzeigeeinrichtung übergeben. Der Pilot kann den Hubschrauber durch den dargestellten TV-Index mit dem Rasterzentrum zur Überdeckung bringen, so daß die Landeaufgabe allein durch Informationsanzeige und entsprechende Reaktion des Piloten unter Rückgriff auf die Monitordarstellung lösbar ist.

Die Erfindung greift demnach auf folgende Baugruppen zurück: Drei Blinkbojen, die auf dem Landeplatz in den Spitzen eines gleichschenkeligen Dreiecks im Umkreis des Landepunktes angeordnet sind sowie einen mit den Blinkbojen verbundenen Blinkgenerator und einen bidirektionalen mit den vorhandenen zwei TV-Kameras verbunden Kommutator, einen Selektionsblock, einen Koordinatenblock und einen Block zur Bestimmung des Moments der Standschwebe; weiterhin mit einer Anzeigeeinheit, einem TV-Indexformer, einem Abstandsmeßblock und einem Höhenund Abstiegsgeschwindigkeitsmeßblock sowie mit einer Pilotenbedieneinheit.

Die Erfindung soll nachstehend anhand eines Ausführungsbeispiels sowie unter Zuhilfenahme von Figuren näher erläutert werden.

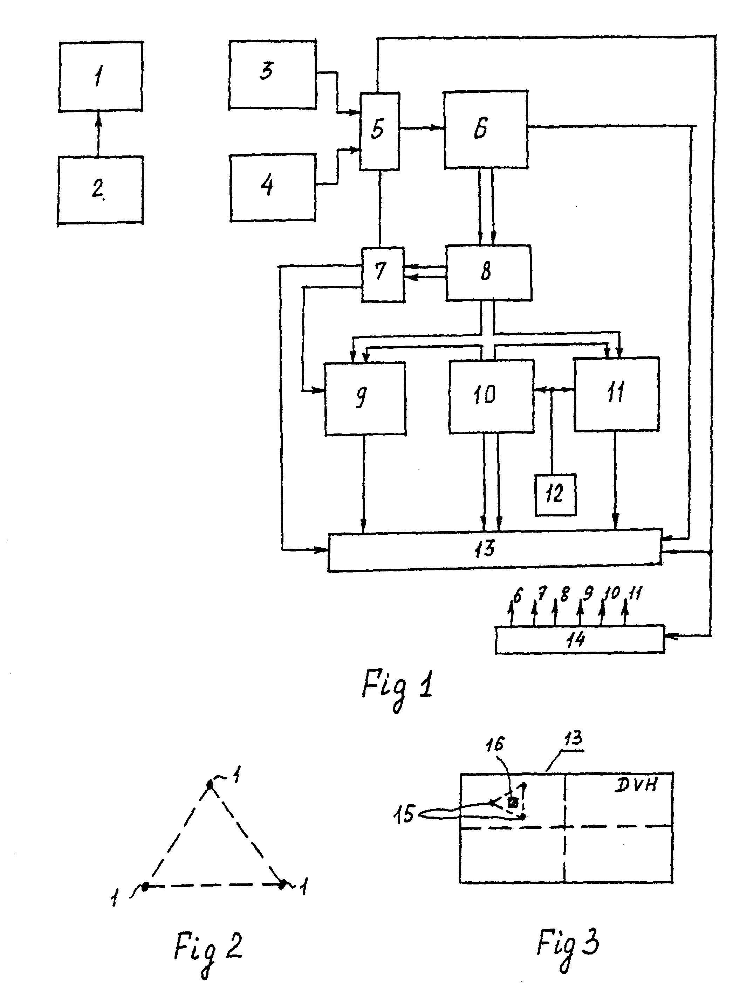

Fig. 1 zeigt hierbei das Blockschaltbild des Hubschrauber-Navigationssystems, die Fig. 2 die geometrische Verteilung der optischen Blinkbojen und Fig. 3 eine Darstellung des Monitorbildes.

Das Hubschrauber-Navigationssystem besteht aus den optischen Blinkbojen 1, dem Blinkfrequenzgenerator 2, den Fernsehkameras 3 und 4, dem Kommutator 5, dem Selektionsblock 6, dem Standschwebemomentblock 7, dem Koordinatenblock 8, dem TV-Indexformerblock 9, dem Abstandsblock 10, dem Block zur Höhen- und Sinkgeschwindigkeitsmessung 11, der Pilotenbedieneinheit 12, der Anzeigeeinheit 13 und dem Taktgeber 14.

In Fig. ist der TV-Index mit 15 und die Darstellung der Blinkbojen 16 auf der Anzeigeeinheit illustriert.

Das Hubschrauber-Navigationssystem umfaßt demnach eine Bodenausrüstung sowie eine Hubschrauberbordausrüstung.

Auf dem vorgesehenen Landeplatz, z.B. einem Flugplatz, einem Flugzeugträgerdeck, einem Eisbrecher oder einer Meeresbohrplattform werden die optischen Blinkbojen 1 (Fig. 1) aufgestellt und mit dem Blinkfrequenzgenerator 2 verbunden, der das gleichzeitige Blinken der optischen Blinkbojen mit einer Wiederholfrequenz von im wesentlichen etwa 1 Hz ermöglicht.

Die Aufstellung der Blinkbojen 1 erfolgt an den Spitzen eines gleichschenkeligen Dreiecks mit einer Seitenlänge von im wesentlichen 5 bis 10 m.

Die optischen Blinkbojen strahlen Licht einer Wellenlänge in einem der Infrarot-Fenster der Lichtstrahlung, d.h. im IR aus, und gewährleisten eine Austrahlung in den Raumwinkeln, die für die Blinkbojenbeobachtung von Bord des Hubschraubers sowohl während des Anfluges als auch während der Landung geeignet sind bzw. ausreichen.

Die TV-Kameras sind mit CCD-photosensitiven Elementen versehen und an Bord des Hubschraubers mit entsprechenden Vibrationsdämpfern montiert.

Die optische Achse der Kamera 3 fällt mit der Längsachse des Hubschraubers zusammen. Die optische Achse der TV-Kamera 4 ist senkrecht zur optischen Achse der TV-Kamera 3 ausgerichtet. Die Ausgänge der TV-Kameras 3 und 4 führen auf den ersten bzw. zweiten Eingang des Kommutators 5, welcher für die Umschaltung der Kameras zwischen den Arbeitsweisen Flug und Landung vorgesehen ist. Ein erster Ausgang des Kommutators ist an den Eingang des Selektionsblockes 6 angeschlossen, welcher zum Formen eines Videosignals herrührend von den optischen Blinkbojen bei Unterdrückung des Hintergrundes vorgesehen ist.

Der Ausgang des Selektionsblockes 6 ist an den Eingang des Koordinatenblockes 8 angeschlossen, der zur Berechnung der gerasterten Koordinaten der Signale von den Blinkbojen dient.

Der Ausgang des Blockes 8 ist an die ersten Eingänge des TV-Indexformerblockes 9, des Abstandsblockes 10 und des Sinkgeschwindigkeitsmessungsblockes 11 angeschlossen. Block 10 dient der Berechnung des Abstandes zu den Blinkbojen in der Anflugphase.

Im TV-Indexformerblock 9 werden die Koordinaten des Schwerezentrums des Dreiecks berechnet, welches aus den Videosignalen von den Blinkbojen gebildet wird und die Darstellung TV-Index auf der Anzeigeeinheit 13 organisiert.

Der Block zur Höhen- und Sinkgeschwindigkeitsmessung 11 berechnet diese Parameter in der Sinkphase. An den dritten Eingang des Kommutators 5 ist der erste Ausgang des Standschwebemomentblokkes 7 angeschlossen. Der Eingang dieses Blockes ist vorgesehen für die Bestimmung des Standschwebemomentes des Hubschraubers über dem mit den Blinkbojen ausgerüsteten Landeplatz, wobei eine Verbindung hin zum Koordinatenblock 8 besteht.

Die Pilotenbedieneinheit 12 ist gleichzeitig an den Eingängen des Abstandsblockes 10 und des Blocks zur Höhen- und Sinkgeschwindigkeitsmessung 11 angeschlossen. Mit der Pilotenbedieneinheit 12 werden in den Blöcken 10 und 11 Parameter an den konkreten Landeplatz angepaßt, wobei darüber hinaus ein Ein- und Ausschalten des TV-Systems insgesamt möglich ist.

Die Anzeigeeinheit 13 dient dem Visualisieren der summarischen Informationen aus den TV-Signalen der Blinkbojen von den Kameras 3 und 4, der digitalen Information und den TV-Indexsignalen.

Hierfür stehen die Eingänge der Anzeigeeinheit 13 mit den Ausgängen der Blöcke 9, 10 und 11 sowie 6 und 5 in Verbindung. Der entsprechende Ausgang des Kommutators 5 ist mit dem Eingang des Taktgenerators 14 verbunden, der die Impulse der Taktfrequenzen und Synchronimpulse für die Kanäle zum Bearbeiten und Berechnen des TV-Systems erzeugt. Die Synchronisations- oder Synchronisiersignale werden an die Blöcke 6 bis 11 abgegeben.

Die Funktionsweise des Hubschrauber-Navigationssystems soll nachstehend beschrieben werden.

Beim Anflug zum Landeplatz ist die erste TV-Kamera 3 angeschaltet, wobei diese im IR-Strahlungsbereich empfindlich ist. Die Kamera 3 empfängt die optischen Signale von den Blinkbojen 1 und wandelt diese in Videoimpulse um.
Vom Ausgang der TV-Kamera 3 werden diese zum Block 6 hin übertragen, in dem das Hintergrundrauschen beseitigt wird und eine weitere Bearbeitung ausschließlich von Signalen, die auf die Blinkbojen zurückzuführen sind, vorgenommen wird.

Gleichzeitig wird eine Abbildung der Szene, die die Kamera 3 aufnimmt, vom Ausgang des Blocks 6 an die Anzeigeeinheit 13 übertragen. Vom anderen Ausgang des Blockes 6 wird das Signal an den Eingang des Blockes 8 übergeben, der die geräte-gerasterten Koordinaten bestimmt, und zwar aus den Signalen von den Blinkbojen in bezug auf die optische Achse der Kamera 3.

Die Informationen zu den erhaltenen Gerätekoordinaten werden von einem der Ausgänge des Blokkes 8 an den Eingang des Blocks 7 übergeben und von dem anderen Ausgang parallel zu den Eingängen der Blöcke 9, 10 und 11 geführt.

In Block 10 wird der Abstand zu den Blinkbojen in der Anflugphase bestimmt. Hierbei wird davon ausgegangen, daß dies ein geometrisches Dreieck ist, welches in dieser Phase als annähernd linear angenommen werden kann.

Der Abstand $\Delta$ zu den Blinkbojen ergibt sich aus dem Produkt der Seitenlänge des Dreiecks und der Brennweite des Objektives der TV-Kamera, dividiert durch den maximalen Abstand zwischen den Videosignalen der Blinkbojen in der Kameraebene.

Die Abstandsinformation wird vom Ausgang des Blockes 10 zur Anzeigeeinheit 13 geführt. Im Zuge der Annäherung an den Landeplatz werden alle drei Signale von den Blinkbojen 1 unter Berücksichtigung des Hubschrauberkurses näher an das Rasterzentrum herangeführt und bilden ein Dreieck (Fig. 3).

Mit Hilfe des Blockes 7 wird das Standschwebemoment über dem Landeplatz bestimmt. Von einem der Ausgänge des Blockes 7, der mit dem Block 9 verbunden ist, wird ein Signal abgegeben, welches die Bildung eines TV-Indexes erlaubt. Von einem weiteren Ausgang des Blockes 7, der mit einem Eingang der Anzeigeeinheit 13 verbunden ist, wird ein Signal bereitgestellt, das eine optische oder akustische Meldung an den Piloten über die Annäherung an die Standschwebe ermöglicht. Vom Ausgang des Blockes 7 gelangt ein Kommando zum Kommutator 5, dergestalt, daß ein Ausschalten der ersten TV-Kamera 3 gegeben ist und die zweiste Kamera 4 eingeschaltet wird. Die Kamera 4 hat dieselbe spektrale Empfindlichkeit wie die Kamera 3. Der Block 11 zur Höhen- und Sinkgeschwindigkeitsmessung bestimmt die aufgezeigten Parameter nach folgenden Formeln:

$$H = \frac{\ell * F_1}{\delta_1} \qquad V = \frac{H_2 - H_1}{\Delta t}$$

mit H = Höhe in m, $\ell$ = Seitenlänge des Dreiecks aus den Blinkbojen in m, $\delta_1$ = der maximale Abstand zwischen den Videosignalen von den Blinkbojen in der Ebene der TV-Kamera in mm, $F_1$ = Brennweite der Kamera 4 in mm, V = Sinkgeschwindigkeit in m/s, $\Delta t$ = Zeitintervall zwischen den Messungen der Größen $H_2$ und $H_1$ in s.

**Patentansprüche**

1. Hubschrauber-Navigationssystem mit im unteren Teil des Hubschrauberrumpfs angeordneten Fernsehkameras, umfassend

   - infrarote Strahlung emittierende Blinkbojen (1), die auf dem Landeplatz in den Spitzen eines gleichschenkligen Dreiecks im Umkreis des Landepunkts angeordnet sind;
   - eine erste Fernsehkamera (3), deren optische Achse parallel zur Längsachse des Hubschraubers ausgerichtet ist, und eine zweite Fernsehkamera (4), deren optische Achse durch die Rotorachse nach unten verläuft, wobei die Kameras (3;4) im gleichen spektralen Bereich wie das von den Blinkbojen emittierte Licht selektiv sind und die Kameras (3;4) mit jeweils einem Eingang eines Kommutators (5) in Verbindung stehen;
   - weiterhin ein erster Ausgang des Kommutators (5) an den Eingang eines Selektionsblocks (6) gelegt ist, dessen Ausgänge sowohl am Eingang eines Koordinatenberechnungsblocks (8) als auch am Eingang einer Anzeigeeinheit (13) angeschlossen sind;

- einen Block (7) zur Bestimmung der Standschwebe, der mit dem Koordinatenberechnungsblock (8) und dem Kommutator (5) in Verbindung steht, wobei der Ausgang des Koordinatenberechnungsblocks (8) an die ersten Eingänge eines TV-Indexformerblocks (9), eines Abstandsblocks (10) und eines Höhen- und Sinkgeschwindigkeitsmeßblocks (11) angeschlossen ist;

- eine Bedieneinheit (12), die zum Abstandsblock (10) und dem Sinkgeschwindigkeitsmeßblock (11) zur Eingabe der Größe der Seitenlänge des Dreiecks führt;

- Verbindungen zwischen dem Block (7) zur Bestimmung der Standschwebe und dem zweiten Eingang des TV-Indexformerblocks (9) sowie der Anzeigeeinheit (13), wobei weitere Eingänge dieser am jeweiligen Ausgang des TV-Indexformerblocks (9), des Abstandsmeßblocks (10) und des Höhen- und Sinkgeschwindigkeitsmeßblocks (11) angeschlossen sind, und mit einem Taktgeber (14).

## Claims

1. A helicopter navigation system with television cameras arranged in the lower part of the helicopter fuselage, comprising:

- flashing buoys (1) emitting infrared radiation, which are arranged on the landing site in the corners of an isosceles triangle enveloping the landing point;

- a first television camera (3) whose optical axis is oriented parallel to the longitudinal axis of the helicopter, and a second television camera (4) whose optical axis extends downwards through the rotor axis, with the cameras (3; 4) being selective in the same spectral range as the light emitted from the flashing buoys, and the cameras (3; 4) communicating with one input each of a commutator (5);

- furthermore, a first output of the commutator (5) being applied to the input of a selection block (6), whose outputs are connected both with the input of a coordinate calculation block (8) and the input of a display unit (13);

- a block (7) for the determination of the spot-hovering, which communicates with the coordination calculation block (8) and the commutator (5), with the output of the coordination calculation block (8) being connected to the first inputs of a TV index forming block (9), a distance measuring block (10), and an altitude and rate of descent measuring block (11);

- an operating unit (12) which leads to the distance block (10) and the rate of descent measuring block (11) for entering the side length of the triangle;

- connections between the block (7) for the determination of the spot-hovering and the second input of the TV index forming block (9) as well as the display unit (13), with further inputs of these being connected with the respective output of the TV index forming block (9), the distance measuring block (10), and the altitude and rate of descent measuring block (11), and with a clock generator (14).

## Revendications

1. Système de navigation pour hélicoptère, comportant une caméra de télévision agencée dans la partie inférieure du fuselage d'hélicoptère, comprenant

- des feux clignotants (1) émettant un rayonnement infrarouge qui sont agencés sur le terrain d'atterrissage aux sommets d'un triangle isocèle dans la circonférence du point d'atterrissage ;

- une première caméra de télévision (3) dont l'axe optique est orienté parallèlement à l'axe longitudinal de l'hélicoptère, et une deuxième caméra de télévision (4) dont l'axe optique s'étend à travers l'axe de rotor vers le bas, les caméras (3 ; 4) étant sélectives dans la même plage spectrale que la lumière émise par les feux clignotants et les caméras (3 ; 4) étant en connexion avec une entrée respective d'un commutateur (5) ;

- dans lequel une première sortie du commutateur (5) est appliquée à l'entrée d'un bloc de sélection (6) dont les sorties sont branchées aussi bien à l'entrée d'un bloc calculateur de coordonnées (8) qu'à l'entrée d'une unité d'affichage (13) ;

- un bloc (7) pour déterminer la sustentation stationnaire, qui est connecté au bloc calculateur de coordonnées (8) et au commutateur (5), la sortie du bloc calculateur de coordonnées (8) étant branchée aux premières entrées d'un bloc d'indexage TV (9), d'un bloc de mesure de distance (10) et d'un bloc de mesure (11) de la vitesse ascensionnelle/de descente ;

- une unité de manipulation (12) qui mène vers le bloc de mesure de distance (10) et vers le bloc de mesure (11) de la vitesse ascensionnelle/de descente pour entrer la taille de la longueur d'un côté du triangle ;

- des connexions entre le bloc (7) pour déterminer la sustentation stationnaire et la deuxième entrée du bloc d'indexage TV (9) ainsi que de l'unité d'affichage (13), d'autres entrées de ceux-ci étant branchées à la sortie respective du bloc d'indexage TV (9), du bloc de mesure de distance (10) et du bloc de mesure (11) de la vitesse ascensionnelle/de descente, et comportant une horloge (14).

Fig 1

Fig 2

Fig 3